Europäisches Patentamt

European Patent Office

Office européen des brevets

(19)

(11) **EP 0 374 356 B1**

(12) **EUROPEAN PATENT SPECIFICATION**

(45) Date of publication and mention
of the grant of the patent:
**03.01.1996  Bulletin 1996/01**

(51) Int Cl.6: **D01D 5/253**, B60C 9/00,
D01F 6/60, D01F 6/62

(21) Application number: **89112948.8**

(22) Date of filing: **14.07.1989**

(54) **Tire cord monofilaments**

Monofilamente für Reifencord

Monofilaments pour câble de pneu

(84) Designated Contracting States:
**AT BE DE ES FR GB IT LU NL SE**

(30) Priority: **22.12.1988 US 288519**

(43) Date of publication of application:
**27.06.1990  Bulletin 1990/26**

(73) Proprietor:
**E.I. DU PONT DE NEMOURS AND COMPANY
Wilmington, Delaware 19898 (US)**

(72) Inventors:
• **Henning, Gregory N.
Wilmington, Delaware 19810 (US)**
• **Anderson, Robert Keith
Signal Mountain Tennessee 37377 (US)**

(74) Representative: **Abitz, Walter, Dr.-Ing. et al
D-81628 München (DE)**

(56) References cited:
EP-A- 350 944         EP-A- 350 945
EP-A- 356 159         EP-A- 374 357
US-A- 3 298 417       US-A- 3 650 884
US-A- 4 056 652

Remarks:
The file contains technical information submitted
after the application was filed and not included in
this specification

## Description

Background of the Invention

The present invention relates to high tenacity monofilaments. More particularly, the invention relates to monofilaments which are particularly adapted for use as reinforcement cords in tires and other mechanical rubber products.

In the carcass plies of tires, nylon or polyester multifilament cords are typically used for reinforcement. Such cords are comprised of an appropriate number of twisted singles yarns plied together to produce cords. For such use in tires, the cords are typically first woven into a very open fabric with lightweight pick yarns, subjected to several fabric treatment steps such as dipping in adhesive and stretching, and then embedded in rubber to produce a rubberized fabric.

In order to produce a suitable rubberized fabric for the fabrication of a tire carcass, the space between adjacent cords cannot be so small that there is insufficient flexibility in the fabric between filaments which can result in the detachment of cords from the rubber or cause other problems. Accordingly, the rivet area (relative space between cords) for fabrics for use in tires ranges between 25-50 percent and is typically about 35 percent. To make a stronger tire without increasing the number of carcass plies, the denier of the cord of a given type must be increased in order to increase the strength of the fabric incorporated into a tire and, because such higher denier cords have a larger diameter, the rivet area decreases at a given end-count. Thus, a compromise in end-count and cord strength must be reached which fixes the fabric strengths which can be obtained at given rivet areas and cord sizes.

A number of multifilament cord sizes have become standard for use in the industry to produce fabrics having strengths which are recognized also to be standard. Thus, tires can be constructed from such fabrics in a known manner to produce tires conforming to Federal ply-rating standards. However, thick fabrics result when the standard multifilament cords are used to provide high strength. In such high strength fabrics, large denier twisted multifilament cords, being approximately circular in cross-section, require a correspondingly large thickness of rubber. Tires made from such fabrics employ large quantities of rubber which increases the cost and results in heat build up in the tire in use. Moreover, fabrics with high denier multifilament cords are very stiff and tires incorporating such fabrics are therefore difficult to produce. With lower denier multifilament cords, less rubber is required in an individual ply, but additional plies would be required to provide the same strength. For the strength provided, low denier multifilament cords are expensive to use because higher levels of twist are needed than for high denier cords and a larger number of ends are employed in the fabric which also requires high end-count beaming or creeling for the warp in weaving.

US-A-3 298 417 discloses the use of higher tenacity synthetic monofilaments as reinforcement in tires. The monofilaments being circular or oval in shape. It is pointed out that a much greater tensile strength and modulus can be achieved with the same weight of filamentary material since the filaments are used in the individual form rather than in twisted cords or fabrics. The polymeric composition of the monofilaments is essentially poly(hexamethylene adipamide).

While there have been other uses of high tenacity monofilaments such as in tennis racket strings as disclosed in US-A-4,055,941 and fishing line as disclosed in EP-A-0 312 039 high tenacity monofilaments have only found limited use in tires. As an alternative to multifilament cords, the use of monofilaments in tires is disclosed in US-A-4,009,511 and US-A-4,056,652 and in Product Licensing Index, April 1972. EP-A-0 312 038 discloses a radial tire containing monofilaments. However, the interrelationship of denier, cross-sectional shape, and width-to-thickness ratio of the cross-sectional shape, and the width of known monofilaments has not been well understood as they relate to optimizing value in use in tires. Consequently, known monofilaments have not provided fabrics with optimum value in use which are equivalent to the fabrics produced from standard multifilament cords.

The invention as claimed in claim 1 solves the problem of how to provide a monofilament of oriented thermoplastic polymer which has optimum values in use in tires.

In accordance with a preferred form of the present invention, the thermoplastic polymer is selected from the class consisting of polyamide homopolymers and copolymers and polyester homopolymers and copolymers. Most preferably, the thermoplastic polymer is selected from the class consisting of polyamides comprising at least about 90% of at least one of poly($\varepsilon$-caproamide) or poly(hexamethylene adipamide) and the monofilament has a tenacity of above about 7.1 dN/tex (8.0 g/d) and a modulus of greater than about 44 dN/tex (50 g/d). In the most preferred form of the invention, the thermoplastic polymer is poly(hexamethylene adipamide). It is also advantageous for the monofilament to have a surface layer at least about 3 and less than about 15 μm thick having an orientation lower than the core and a parallel refractive index for the polymer in the surface layer of less than 1.57.

In another preferred form of the invention, the thermoplastic polymer is a polyester, most preferably poly(ethylene terephthalate).

In another preferred form of the invention, the monofilament is "ready-for-rubber" and the surface of the monofilament has an adhesive coating of from about 0.5% to about 6.0% by weight based on the weight of the monofilament and the monofilament has a shrinkage of less than about 6%, most preferably less than 4.5%.

A rubberized fabric in accordance the invention comprises a rubber matrix containing the monofilaments of the invention as reinforcement, preferably with the monofilaments being substantially free of twist and arranged in a generally parallel and generally evenly spaced-apart relationship.

The monofilaments in accordance with the present invention are ideally suited for use as tire cords to produce fabrics of standard strengths while providing significant improvements in cost and performance over multifilament cords. In the novel tires which result, the use of monofilaments of the invention in tire carcass plies enables fewer cords to be used per cm than in known rubberized fabrics. At the same time, the monofilaments in accordance with the invention reduce the amount of rubber required in the fabric having a given strength. Therefore, monofilaments of the invention provide optimized fabrics of equal strength to fabrics containing multifilament cords. Surprisingly, high strength fabrics containing high denier monofilaments in accordance with the invention can be made without undue stiffness in the resulting fabric. Tires containing the monofilaments of this invention show surprisingly high durability and cooler running properties when compared to equivalent tires from multifilament nylon or polyester cords.

Brief Description of the Drawings

Figures 1a and 1b are cross-sectional views of preferred monofilaments in accordance with the present invention; and

Figure 2 is a graphical representation showing denier plotted against width-to-thickness ratio for a preferred class of monofilaments in accordance with the present invention.

Detailed Description

Polymers useful for monofilaments in accordance with the invention include various thermoplastic homopolymers and copolymers having sufficiently high molecular weights to achieve high strength monofilaments. Polyamide homopolymers and copolymers having a relative viscosity of above about 50 on a formic acid basis are particularly useful. Polyamides for producing monofilaments of the invention include poly(hexamethylene adipamide) and poly($\varepsilon$-caproamide), poly(tetramethylene adipamide), etc., and their copolymers. Preferably, the polyamide is at least about 90% of one of poly-($\varepsilon$-caproamide) or poly(hexamethylene adipamide). Most preferably, the polyamide is homopolymer poly(hexamethylene adipamide).

Polyester homopolymers and copolymers having an intrinsic viscosity of above about 0.7 are also advantageously employed. Polyesters include poly-(ethylene terephthalate), poly-(propylene terephthalate), poly-(butylene terephthalate), poly-(ethylene 2,6 napthoate), poly-(1,4 cyclohexanedimethanol terephthalate), and their copolymers. Particularly preferred is poly(ethylene terephthalate).

Monofilaments in accordance with the invention are produced by spinning the polymer in a process which produces high strength monofilaments. For polyamide monofilaments, the process of US -A- 4,009,511, is particularly preferred because the use of steam in the first stage draw produces a highly deoriented layer on the monofilament surface of about 3 to about 15 $\mu$m thick which has a lower orientation than the core of the monofilament. This surface layer is characterized by a parallel refractive index, $n\|$, of less than about 1.57 as determined by the method described in US -A- 4,009,511. The deoriented surface is believed to be responsible for the superior bonding of polyamide monofilaments having such surface to rubber when an adhesive such as resorcinol formaldehyde latex (RFL) is employed.

For polyesters, particularly poly(ethylene terephthalate), the process described in US -A- 3,963,678 is useful for making polyester monofilaments in accordance with the invention provided that a suitable spinneret, e.g., rectangular, obround, oval, etc. is employed as will become more apparent hereinafter.

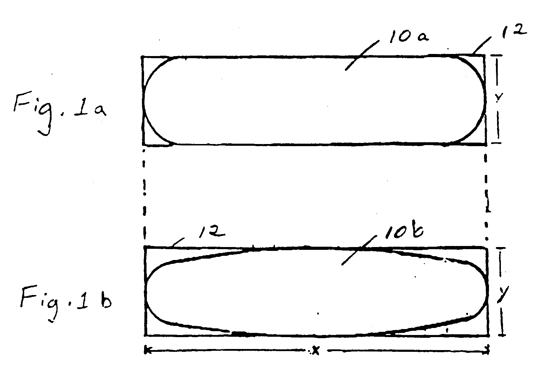

Referring to Figures 1a-1b depicting preferred monofilaments 10a-10b in accordance with the invention, the monofilaments have an oblong cross-section with a width-to-thickness ratio greater than about 2.0 and a width in mm of greater than about $1.22/(\text{density})^{1/2}$. By "oblong", it is intended to refer to any of a variety of elongated cross-sectional shapes which are circumscribed by a rectangle 12 as shown in Figures 1a-1b with its width (major dimension) designated in the drawing by "x" greater than its thickness (minor dimension) designated by "y".

Preferably, in a monofilament in accordance with the invention, the cross-section is obround as shown in Figure 1a, i.e., having a generally rectangular cross-section with rounded corners or semicircular ends and is produced by spinning through an obround or rectangular spinneret. Depending on the viscosity of polymer as extruded, the resulting monofilament has a cross-section which may vary somewhat from the cross-section of the spinneret and may assume some oval character and the "flat" areas may be somewhat convex. As used herein for cross-sections of monofilaments, obround is intended to refer to obround cross-sections or those which approximate obround cross-sections. Other preferred embodiments include monofilaments with an oval cross-section as shown in Figure 1b.

The width-to-thickness ratio of the monofilaments, i.e., the width x of the circumscribing rectangle divided by the thickness y, is greater than about 2.0. While the advantages of the invention are realized increasingly with increasing width-to-thickness ratio above about 2.0, a practical upper limit for the monofilaments is ultimately reached when the spacing needed between adjacent cords becomes so large at a rivet area of, for example 35%, that there is insufficient support for the rubber between cords and rubber failure occurs. Also, as the width-to-thickness ratio becomes very large (film-like filament) high shear and bending stresses will ultimately cause filament buckling and splitting. Thus, it is generally preferable for the width-to-thickness ratio of monofilaments of the invention not to exceed about 20.

The filaments of the invention have a width in mm of greater than about $1.22/(density)^{1/2}$. For poly(hexamethylene adipamide) and poly($\varepsilon$-caproamide) polyamides, the densities are in the range of 1.13-1.14 g/cc. For poly(ethylene terephthalate) polyester the density is 1.38-1.41 g/cc. Thus, the width of polyamide and polyester monofilaments is greater than about 1.15 mm and 1.03 mm, respectively. Monofilaments of the invention with greater than these widths can be manufactured at high productivity and also reduce the end count in fabrics thereby lowering cost in use. High manufacturing productivity results from increasing product denier via making wider filaments without increasing thickness (which happens at constant cord index number, n). Surprisingly, it has been found that the speed at which monofilaments of this invention can be spun and drawn is primarily dependent on their thickness. Hence, wider filaments produce more pounds/hour/threadline than narrow filaments of the same thickness. It has been discovered that monofilaments which best combine the advantages of high productivity and high value to the customers in rubberized fabrics have widths in mm of greater than $1.22/(density)^{1/2}$.

The tenacity of the monofilaments in accordance with the invention is greater than about 6.6 dN/tex (7.5 g/d) and, when the polymer is a polyamide at least about 90% of which is one of poly-($\varepsilon$-caproamide) or poly(hexamethylene adipamide), is preferably greater than about 7.1 dN/tex (8.0 g/d). The modulus is above about 40 dN/tex (45 g/d) and preferably is above about 44 dN/tex 50 g/d when the polymer is a polyamide at least about 44 dN/tex 90% of which is one of poly-($\varepsilon$-caproamide) or poly(hexamethylene adipamide). For such polyamides, the toughness of the monofilaments is greater than about 0.6 dN·cm/tex·cm (0.7 g cm/denier cm). Knot strenght for such polyamide monofilaments is above about 4.4 dN/tex (5.0 g/d).

The linear density (denier) of the monofilaments is above about 1,111 dtex (1,000) and can be as great as about 13,333 dtex (12,000) or more. Since the advantages of the monofilaments of the invention are more pronounced at high linear densities, monofilaments having a linear density (denier) of greater than about 2,222 dtex (2,000) are preferred.

In a monofilament according to the invention, the relationship between denier and width-to-thickness ratio (WTR) is defined by equation I:

$$\text{Linear Density (dtex)} = \left[ \frac{217 \times \text{WTR} \times (1.225)^n}{(\text{tenacity})\ (\text{WTR} - .215)^{1/2}} \right]^2 \times \frac{\text{FSR}}{\text{density}} \tag{I}$$

wherein tenacity is expressed in dN/tex, density is expressed in g/cm³, n (cord index number) = -1, 0, 1, 2, 3, 4, and FSR = .95 - 1.25. FSR, fabric strength ratio, takes into account variations in carcass fabric strength that can occur when using multifilament cords as will be explained in more detail hereinafter.

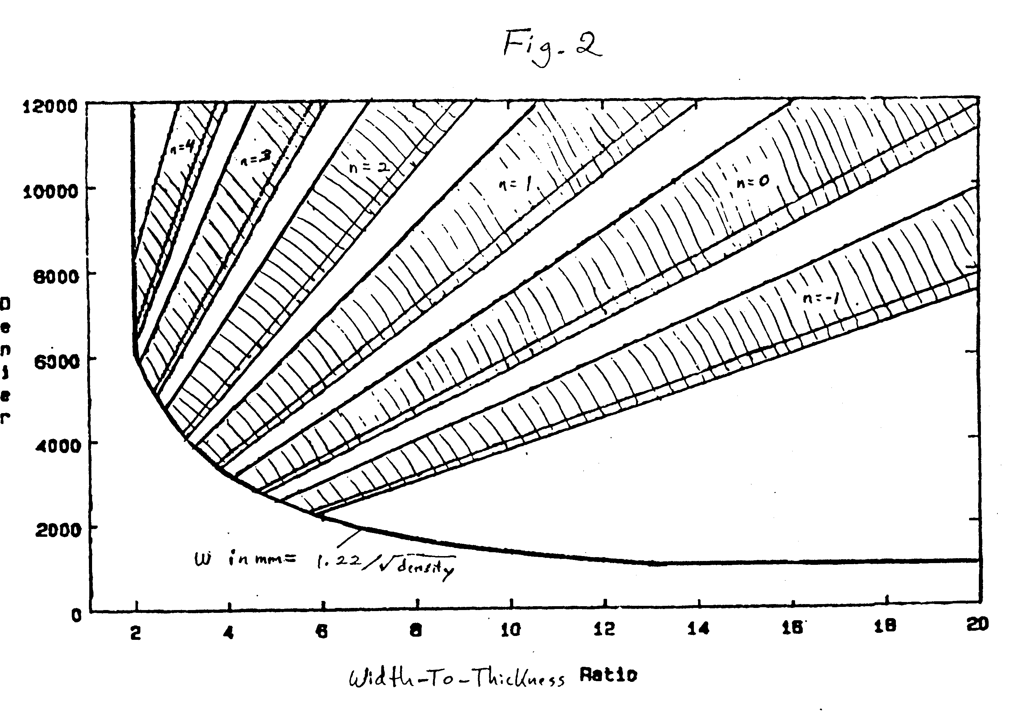

Referring to Figure 2, the linear density of 7.9 dN/tex (9.0 g/d) poly(hexamethylene adipamide) monofilaments of the invention is plotted against width-to-thickness ratio when FSR = .95-1.25. The areas around each of the cord index number lines identified as n=-1, n=0, n=1, n=2, n=3, and n=4 represent the denier and width-to-thickness ratio of monofilaments in accordance with the invention imparting generally equivalent strength to rubberized fabrics with generally equivalent rivet area made with conventional multifilament cords. Having this relationship, the monofilaments of the invention with the cord index numbers indicated can be employed to produce standard-strength fabrics equivalent to fabrics made from the multifilament cords described in Table 1 below:

## TABLE 1

| Monofilament Cord Index Number, n | Multifilament Yarn dtex (Denier) | | Multifilament Cord Construction | | Standard Fabric Strength - N/cm (Lbs./in.) @ 35% RA |
|---|---|---|---|---|---|
| | Nylon | Polyester | Nylon | Polyester | |
| 1 | 930 (840) | 1100 (1000) | 930/1/2 (840/1/2) | 1100/1/2 (1000/1/2) | 1730 (990) |
| 2 | 930 (840) | 1100 (1000) | 930/1/3 (840/1/3) | 1100/1/3 (1000/1/3) | 2100 (1200) |
| 2 | 1400 (1260) | 1660 (1500) | 1400/1/2 (1260/1/2) | 1660/1/2 (1500/1/2) | 2100 (1200) |
| 3 | 1400 (1260) | 1660 (1500) | 1400/1/3 (1260/1/3) | 1660/1/3 (1500/1/3) | 2560 (1460) |
| 3 | 2100 (1890) | 1660 (1500) | 2100/1/2 (1890/1/2) | 1660/1/2 (1500/1/2) | 2560 (1460) |
| 4 | 2100 (1890) | — | 2100/1/3 (1890/1/3) | — | 3150 (1800) |

Monofilaments in accordance with the invention wherein n=-1 or n=0 are useful in lightweight fabrics which could be made from 700/1/2 (630/1/2) or 470/1/2 (420/1/2) nylon multifilament cords. Because of high cost of fabrics containing low denier multifilament cords, such fabrics are not used at the present time. Fabrics containing monofilaments in accordance with the invention could be used in lightweight fabric applications such as chafer fabrics or as cap plies in radial tires because such monofilaments offer significant economies over light denier multifilament cords with their high twisting and converting costs.

Of the monofilaments of the invention with a certain cord index number, it is generally desirable to employ a monofilament with a width-to-thickness ratio which is the maximum practical width-to-thickness ratio for a given denier to reduce the number of ends per inch and decrease the amount of rubber in the fabric.

Because multifilament cord strength is influenced by the tenacity of the component yarns making up the cord, relative alignment of the filaments in the yarn, twist level, hot-stretching conditions, penetration of dip into the cord bundle, etc., FSR in equation I above ranges between .95 and 1.25. In addition, variations in cord gauge will occur with changes in parameters such as twist level, and will require a subsequent change in end count to maintain constant rivet area in a fabric. Preferably, FSR is between about 1.00 and 1.20 to provide replacement for improved strength multifilament fabrics.

As illustrated in Table 2, different fabric strengths can be obtained when using differing cords all containing two ends of 1400 dtex (1260 denier) nylon. Cord I, at 205 N (46 lb) break strength, is 9N (2 lbs) weaker than the standard dipped cord break strength listed for 1400/1/2 (1260/1/2) nylon cord in Table 1. This cord strength is obtained when lower strength supply yarn, e.g. 8.3 vs 8.6 dN/tex (e.g. 9.4 vs 9.8 gpd), is used or when high adhesive dip penetration is obtained. Cord II illustrates a cord with 220 N (50 lb) break strength obtained by first stretching and then applying the adhesive dip at high tension to minimize dip penetration (e.g., a stretch-dip process). In applications where fatigue resistance is less critical, e.g., in radial tires (versus bias tires) or in mechanical rubber goods applications, twist can be reduced to increase strength and reduce cord gauge. Cord III is an example with 220 N (50 lbs) break strength which is obtained at 0.05 mm (.002") lower cord gauge with a 1400/2/1 (1260/2/1) twisted yarn structure. As in Cord IV, even higher break strength, e.g., 240N (54 lbs), can be achieved from the same structure using high tenacity yarn, 9.2 dN/tex (10.4 g/d). Thus, the fabric strengths provided by similar multifilament yarns can vary by about 25% to 30% from the standard strengths listed in Table 1. Monofilaments in accordance with the invention can be used to replace most multifilament cords used in typical fabrics.

TABLE 2

| Item | Construction | Twist turns/m (tpi) | Brk St N (lbs) | Gauge mm (inches) | Fabric Str at N/cm (lbs/inch) (35% rivet area) | FSR |
|---|---|---|---|---|---|---|
| I | 1400/1/2 (1260/1/2) | 394x394 (10x10) | 205 (46) | .660 (.026) | 2020 (1150) | .96 |
| control | 1400/1/2 (1260/1/2) | 394x394 (10x10) | 210 (48) | .660 (.026) | 2100 (1200) | 1.0 |
| II | 1400/1/2 (1260/1/2) | 394x394 (10x10) | 220 (50) | .660 (.026) | 2190 (1250) | 1.04 |
| III | 1400/2/1 (1260/2/1) | 120 (3) | 220 (50) | .610 (.024) | 2370 (1354) | 1.13 |
| IV | 1400/2/1 (1260/2/1) | 120 (3) | 240 (54) | .610 (.024) | 2560 (1463) | 1.22 |

In preferred monofilaments of the invention which are "ready-for-rubber" and can be incorporated into rubber products without operations such as stretching and dipping, the shrinkage is less than 6%, preferably less than 4.5%, oth-

7

erwise the size and uniformity of tires, belts and similar products are adversely affected. The "ready-for-rubber" monofilaments of this invention have an adhesive coating on the filaments which facilitates the bonding of the filament to rubber. The most commonly used coating contains a combination of resorcinol, formaldehyde and latex, and is commonly referred to as RFL. Other adhesive coatings could be used as long as they promote the bonding between the monofilament and rubber. Surprisingly, low levels of RFL on the monofilaments, 0.5-6.0%, yield good adhesion to rubber.

The adhesive coating can be applied to the monofilament by any of the typical processes for coating a monofilament, such as dipping in a bath containing a dispersion or solution of adhesive materials, spraying a dispersion or solution of adhesive materials on the filament, applying molten or neat liquid adhesive on the filament, etc. In a preferred process, the untwisted monofilament is dipped in an aqueous dispersion of the adhesive, such as RFL, so that 0.5-6.0 weight percent adhesive is picked up (dry weight of adhesive on dry-weight filament basis). The still-wet monofilament is oven treated at 150-260°C (300-500°F) to dry and set the monofilament in one or more stages. The monofilament tension is controlled during the heating stages and the monofilament may be stretched or relaxed during the heating stages depending on the final cord properties desired. The dipping, stretching, setting conditions for the monofilament are adjusted to suit the oriented polymer of the monofilament and the end-use for which it is to be used. For certain monofilaments, such as polyester, it is helpful to precoat the filament with an adhesion activator, prior to coating with the adhesive. A typical precoat for polyester contains a mixture of LVBI isocyanate, gum tragacanth and epoxy resin (N.E.R.-10A) as an aqueous dispersion. Other epoxy, aziridine, isocyanate or urethane precoats can be used, or combinations of such precoats.

The monofilament of this invention, prepared with the specified properties, and adhesive coating described above, is ready for direct embedment in rubber. The product does not require any of the following steps: singles or ply twisting, weaving, adhesive dipping, stretching or setting. The monofilament requires no twist while it is well known that analogous multifilament yarns require singles and ply twisting to achieve the desired level of fatigue resistance in tires. Creel calendaring, i.e., embedding a warp of nonwoven monofilament ends in rubber to produce a fabric with the monofilaments in a general parallel and evenly spaced-apart relationship, is advantageously employed to produce rubber fabrics suitable for use in tire building.

The invention is further illustrated in the examples which follow in which the results reported are determined by the following test methods.

Test Methods

Conditioning: Large denier monofilaments of this invention require up to 10 days for the moisture content to fully equilibrate with atmospheric moisture. In the testing of filaments described in the following, various periods of time less than that required to achieve full moisture regain were sometimes used. For example, a 2200 dtex (2000 denier) monofilament that is about 0.30 mm (.012") thick takes about three days to equilibrate, but a 6600 dtex (6000 denier) filament that is about 0.46 mm (.018") thick takes about five days. The actual length of time required depends on the thickness of the monofilament. Therefore, the deniers and denier dependent properties of the examples changed as testing in sequential steps took place. Each Table states the age/conditioning period applicable to the properties in that table. For properties set forth in the claims, measurement is intended at full moisture equilibration (when two measurements of denier 24 hours apart are the same).

Relative Viscosity: Relative viscosity of polyamides refers to the ratio of solution and solvent viscosities measured in capillary viscometer at 25°C. The solvent is formic acid containing 10% by weight of water. The solution is 8.4% by weight polyamide polymer dissolved in the solvent.

Width and Thickness: Width and thickness are measured with a Starrett Model 722 digital caliper or equivalent instrument. For width measurements it is convenient to fold the monofilament into a "V" and measure both sides of the "V" at the same time, being sure to keep the vertex of the "V" just outside the measured zone. This technique assures that the monofilament does not tilt between the faces of the measuring instrument giving a low reading.

Weight % adhesive on monofilament: Adhesive on monofilament is determined by weighing an adhesive treated sample that has been cut into short (2.5 cm (1 inch) or less) sections. The polymer portion of the cut sample is then dissolved in an appropriate solvent (hot formic acid for polyamide, trichloroacetic acid and methylene chloride mixture for polyester). After rinsing and drying, the weight of the undissolved adhesive is measured and the % adhesive on monofilament determined by dividing the weight of undissolved adhesive by the weight of the monofilament without adhesive and multiplying by 100.

Shrinkage: Yarn shrinkage was determined by the basic method of ASTM D-885-85, Section 30.3 as described in:

"1988 Annual Book of ASTM Standards; Vol. 07.01; Textiles, Yarns, Fabrics and General Test Methods."

Specifically, the yarns were heated at 177°C in hot air for two minutes at 0.044 dN/tex (0.05 gm. per denier) restraining force. The test device was a "Testrite Thermal Shrinkage Oven."

Linear density : The monofilament is conditioned at 55 ± 2% relative humidity, and 24 ± 1°C (75 ± 2°F) on the package for a specified period, usually 24 hours when the monofilament has aged more than ten days since being made. A nine meter sample of the monofilament is weighed.dtex (Denier) is calculated as the weight of a 10,000 (9000) meter sample in grams. A linear density (denier) correction for any adhesive present on cord or monofilaments is made based on the measured amount of adhesive on the filament as determined above.

Tensile Properties: Before tensile testing of as-spun monofilaments, the monofilament is conditioned on the package for a minimum specified period at 55 ± 2% relative humidity and 24 ± 1°C (75 ± 2°F). This period is usually 24 hours when the filament has aged more than ten days since spinning. By contrast, the denier and tensiles for any dipped cords reported herein are measured on samples relax-conditioned in skein form at the time, temperature and humidity indicated above. A recording Instron unit is used to characterize the stress/strain behavior of the conditioned monofilament. Samples are gripped in air-activated Type 4-D Instron clamps maintained at at least 276 Kpa (40 psi) pressure. Samples are elongated to break while continuously recording monofilament stress as a function of strain. Initial gauge length is 25.4 cm (10 inches), and cross head speed is maintained at a constant 5mm/s (12 inches/minute). On monofilaments 24 hours old or less, tensile properties were measured at a constant crosshead speed of 2.5 mm/s (6 inches/minute).

Break Strength is the maximum load achieved prior to rupture of the sample and is expressed in Newton (pounds or kilograms).

Tenacity is calculated from the break strength divided by the denier (after correcting for any adhesive on the filament) and is expressed as deci Newton per tex (dN/tex) (grams per denier (g/d)).

Elongation is the strain in the sample when it ruptures.

Modulus is the slope of the tangent line to the initial straight line portion of the stress strain curve, multiplied by 100 and divided by the dip-free denier. The modulus is generally recorded at less than 2% strain.

The knot tensiles are measured in the same manner as straight tensiles except that a simple overhand knot is tied in the monofilament at about the midpoint of the sample to be tested. The simple overhand knot is made by crossing a length of monofilament on itself at about the midpoint of its length and pulling one end through the loop so formed. Since the monofilament tends to assume some of the curvature of the wind-up package, the knot is tied with and against this curvature on separate samples and the two values averaged.

Toughness is measured by dividing the area underneath the stress-strain curve by the product of the Instron gauge length and the corrected linear density.

Hot, 2-Ply Strip Adhesion Test: The test utilized was the same as ASTM Test D-4393-85; Strap Peel Adhesion of Reinforcing Cords or Fabrics to Rubber Compounds (pages 1133-1142; 1985 Annual Book of ASTM Standards, Section 7, Volume 7.01) with a few modifications. The particular variation used was to test individual monofilament tire cords that had been RFL dipped singly. The rubber stock employed was a combination of natural rubber (80 parts by weight), styrene-butadiene rubber (20 parts), N351 Black (35 parts), plus minor amounts of other conventional ingredients. The dipped tire cords were warped so that adjacent cords directly abutted each other. For example, 4400 dtex (4,000 denier) 3 WTR dipped monofilament cord requires about 8.7 ends per cm (22 ends per inch). After embedment of the cords in the rubber stock, the sample was cured at 160°C ± 2°C for 20 minutes at 1340 kPa pressure. Since hot adhesion was desired, the samples were heated in the Instron oven at 120°C for 25 ± 5 minutes prior to testing. The separation force was based on Option 1 (the mid-line between the high and low peaks of separation force). Eight samples per warp were tested and the results were reported as average force in N/cm (pounds per inch or kg/cm).

Fabric Bending Stiffness: Fabric bending rigidity is measured by using a Mitex MK II Bending Tester manufactured by IDR, Needham, Massachusetts. In this test, a fabric sample about 5.1 cm. (2 inches) long and .95 cm (.375 inches) wide is cut from a rubberized fabric containing the test cords aligned parallel to one another and to the long (5.1 cm) dimension of the sample. This sample is inserted between pins mounted on the sample block and between the pin on the micrometer and the arm of the force transducer. Then, the pin mounted on the micrometer is adjusted to bring the fabric sample into light contact with the arm of the force transducer. The distance from the sample block pin to transducer arm is 2.5 cm (1 inch). The sample block moves to bend the sample into circular arcs of progressively increasing curvature (curvature = 1/radius of curvature). The maximum curvature is 0.59 cm$^{-1}$ (1.5 in.$^{-1}$). The outputs of the force transducers and a transducer which measures block rotation are fed to an X-Y recorder. Since the bending moment on the sample equals the force on the force transducer times the distance between the sample block pin and the arm of the force transducer and the curvature is proportional to the block rotation, the output plot gives the yarn moment-curvature response.

The slope of the moment-curvature plot equals the sample rigidity and has units of force-length$^2$. The instrument is calibrated before measurements are made by measuring the slope of a stainless steel strip of calculated rigidity, 0.0051 cm. (0.002 inch) thick and 1.27 cm. (0.5 inch) wide inserted in place of the fabric. The rigidity of the stainless steel strip is calculated by the following equation:

$$R_c = w_c t_c^3 E_c/12 \text{ where } R_c = \text{Rigidity of calibration strip}$$

$$w_c = \text{width of calibration strip} = (0.5 \text{ in}) \ 1{,}27 \text{ cm}$$

$$t_c = \text{thickness of calibration strip} = (0.002 \text{ in}) \ 0{,}00508 \text{ cm}$$

$$E_c = \text{Young's modulus of calibration strip} = 207 \times 10^6 \text{ KPa} \ (30{,}000{,}000 \text{ psi}) \ .$$

therefore :

$$R_c = 0.29 \text{ cm}^2 N \ (.010 \text{ in}^2 - \text{lb}).$$

The slope of the calibration strip plot is divided into the calibration strip's calculated rigidity to give the calibration factor. The rigidity of any unknown fabric sample equals its slope times the calibration factor.

Five fabric samples from each item are measured as above and the results are averaged to give the values for R for the rubberized test fabrics.

The fabric bending stiffness (cm$^2$.N/cm (in$^2$-lbs/in.)) is determined by dividing R by the width of the sample strip (0.952 cm (0.375 in.))

Flex Fatigue: Flex fatigue is measured by determining the strength loss in test cords after cycling a 2-ply rubberized strip containing the test cord over a small pulley. 2-ply strips are prepared by wrapping a 23 x 46 cm (9"x18") sheet of 0.38 mm (.015") 80:20 NR:SBR rubber on a building drum. RFL adhesive treated test cord is then wound onto the drum using a lathe to uniformly control cord spacing. End count is adjusted to provide 35% rivet area. A second layer of 0.38 mm (.015") rubber is then applied and the composite is stitched to remove entrapped air. The assembly is removed from the drum, cut into two 20 x 25 cm (8"x9") pieces (cord parallel to the 23 cm (9") direction), and placed on top of one another such that the cords in each ply are parallel to one another. A 5 x 20 cm (2"x8") strip of cotton duck (provides gripping surface for clamps in fatigue tester) is applied across each end of the warp and a 0.76 mm. (.030") 13x20 cm (5"x8") sheet of rubber is used to fill in the area between the two cotton strips. These same materials are applied to the opposite side of the pad. The 2 ply pad is then cured in a platen press for 20 min at 160°C under 62.3 MN (7 tons) pressure. The cured pad is cooled, conditioned 8 hours at 55% RH/24°C (75 deg F), and then cut into 2,5x23 cm (1"x 9") strips. The strips are then bent 180 degrees around a 1.11 cm (7/16") diameter pulley and clamped at each end in the Scott Flex tester (model Z) (manufactured by Scott Testers Inc., Providence, N.J.) and loaded at one end to 667 N (150 lb). The strip is then flexed over the pulley at a rate of 250 cycles per minute for a total of 230,000 cycles, while maintaining an ambient temperature of 100 °C. The cords from the ply closest to the pulley are then removed from the pad (after soaking the pad for 24 hours in a 50/50 blend of Stoddard solvent and Freon 113) and the tensile strength is then measured on an Instron. The retained strength is compared with cord removed from an unflexed pad. Flex fatigue retained strength is determined from the equation: Retained Strength = 100 x (fatigued strength/unfatigued strength).

Inflation Growth: Initial tire size is determined after mounting the tire on an appropriate rim and inflating the tire to 34.5 KPa (5 psi). After the tire is held at 34.5 KPa (5 psi) for 4 hours at 38°C (100 deg F), circumference is measured (at the center of the tread) using a flexible steel tape measure). Care should be taken during the measurement to avoid any mold flashing. Cross section width is measured at the sidewalls at the widest part of the tire at 3 different positions (120 degrees apart - positions should be marked so that final measurements after growth can be made at the same spots) using a set of calipers. The tire is then inflated to the appropriate pressure 165 KPa (24 psi) for a load range "B" tire having a maximum permissible inflation pressure of 220 KPa (32 psi), 190 KPa (28 psi) for a load range "C" tire having a maximum permissible inflation pressure of 250 KPa (36 psi),220 KPa (32 psi) for a load range "D" tire having a maximum permissible inflation pressure of 275 KPa (40 psi)) and held at that pressure for 24 hours at 38°C (100 degrees F). At the end of the 24 hour period, circumference and cross section width (CSW) are measured at the higher pressure. Cross section height (CSH) is calculated from the circumference measurement using the following relationship:

$$CSH = [(\text{circumference}/3.14) - \text{wheel rim diameter}]/2$$

Tire inflation growth is calculated from the average growth in cross section width and cross section height. For example, for the 7.75-14 load range D tire:

$$\text{Inflation Growth (\%)} = 100 \ [[CSH(220 \text{ KPa}) + CSH(34.5 \text{ KPa})] + [CSW(220 \text{ KPa}) + CSW(34.5 \text{ KPa})] - 2]/2$$

Rolling Resistance: Rolling resistance was measured using the torque sensor method described by R. L. Keefe and A. S. Koralek in their paper "Precision Measurement of Tire Rolling Resistance", ACS Rubber Division Symposium: Tire Rolling Resistance (October 1982), pp 78 - 104, D. J. Schuring, ed., 1983. Slip angle was adjusted to provide zero side force and rolling resistance was measured at 80 Km/h (50 mph), 250 KPa (36 psi) inflation pressure and 5300N (1200 lb) load for the 7.75-14 tires and at 80 Km/h (50 mph), 210 KPa (30 psi) inflation pressure and 3000 N (670 lb) load for the P155/80R13 tires.

Cornering Coefficient: Cornering coefficient is measured on the same apparatus used for the rolling resistance measurement. Tires are first exercised for 90 minutes at 110 Km/h (70 mph), 100% TRA (Tire and Rim Association) rated load. After cooling, the tires are conditioned 4 hours at 24°C (75 deg F), 220 KPa (32 psi) (7.75-14 load range F tires) and 180 KPa (26 psi)(P155/80R13 tires). The tire is then warmed up for 5 minutes at 56 Km/h (35 mph) at the specified test load (6700 N (1500 lbs) for 7.75-14 and 3700 N (838 lbs) for P155/80R13). Lateral force is then recorded as a function of slip angle as the tire is steered from 0 to +3 degrees and from 0 to -3 degrees, changing the slip angle at a rate of 1 1/4 degree per second. The slope of the cornering force/slip angle plot in N/degree (lbs/degree) is divided by the test load on the tire to obtain the cornering coefficient.

Tire Temperatures: The temperatures of running tires were determined by inserting thermocouples into the contained air cavity of the tire during wheel testing. The thermocouples were connected to the tires via a slip-ring assembly and temperatures were monitored continuously.

DOT 119 Step Load Endurance Test: The test performed is the basic test described in Motor Vehicle Safety Standard No. 119, Part 571, S119-1, Rev. 2/7/74, plus an extension to the test.

The tire is mounted on an appropriate test rim, inflated to the inflation pressure corresponding to the maximum load rating marked on the side of the tire, and conditioned for 3 hours at 38°C (100°F). Pressure is checked and readjusted if necessary ((275 KPa (40 psi) for a 7.75 -14 load range D tire). The tire is tested at 80 Km/h (50 mph) for 7 hours at 75% (of maximum rated) load, 16 hours at 97% load and 24 hours at 114% load. In testing beyond DOT-119, the speed is increased to 96 Km/h (60 mph) and the tire is then run 800 Km (500 miles) each at 120%, 125%, 130% ... etc., increasing the load in 5% increments every 800 Km (500 miles) until failure.

Bead Area Endurance of Passenger and Truck Tires: This test is designed to induce flex type failures around the turn-up area (without thermal degradation interference) through high load applications.

The tire is mounted on an appropriate heavy-duty test rim and conditioned at 38°C (100°F) for 4 hours at 165 KPa (24 psi). The pressure is readjusted to the maximum psi allowed for the specified load range and then conditioned for another 4 hours.

The tire is then tested at 48 Km/h (30 mph) in the following sequence until failure: 90% load, 2 hours; 115% load, 2 hours; 150% load, 20 hours; 170% 20 hours; 190% load, 20 hours; and 210% load, until failure.

Carcass Strength: Carcass strength is calculated by multiplying the cord strength in N by the number of cord ends per cm in the carcass fabric and multiplying that result by the number of carcass plies in the tire.

Rivet Area: Rivet area is a measure of the amount of unreinforced rubber in the carcass or belt plies and is calculated from the following equation:

$$\text{Rivet Area} = 100\,[1\text{-(cord width x ends per unit width of fabric)}]$$

Examples 1-7

These examples describe the preparation of obround polyhexamethylene adipamide monofilaments in accordance with the invention having various properties and as produced at differing throughputs. For each example, parameters and process conditions indicated by the bracketed number are listed in Table 3 on the line noted by the corresponding bracketed number.

High quality polyhexamethylene adipamide polymer is made in a continuous polymerizer having a relative viscosity of 70 and is extruded into a [1] dtex (denier) filament (after drawing) with width-to-thickness ratio of [2] (after drawing) at the rate of [3] kg/hour through a rectangular spinneret orifice having rounded corners and the dimensions [4], is passed vertically downward through an air gap of [5] cm, and is quenched in water at [6] °c for a distance of about [7] cm. After water quenching, the amount of residual quench water on the filament is regulated by adjustment of the air flow in an air jet so that the quantity of water on the surface of the filament is between 10 and 25% by weight water on the dry weight of the monofilament. The wet monofilament is then forwarded in sequence to a puller roll at [8] mpm, pretension rolls at [9] mpm, and feed rolls at [10] mpm. After the feed rolls, water is added to the monofilament by contacting the filaments with felt wicks supplied with water at the rate of [11] gm/min and the filament is forwarded into a [12] cm long steamer and treated with saturated steam at [13] KPa (psig) [14] °C. The steamer has entrance and exit steam expansion chambers connected to a vacuum source to prevent steam from leaking into the plant environment. The draw point is maintained in the entrance steam expansion chamber. While still in the steamer but near the exit end, the monofilament is run through a bath about 3 cm long containing water at a temperature of about 60°C and flowing at the rate of about fifteen liters per hour. The surface of the monofilament is cooled in the bath before leaving the steamer. The monofilament is then forwarded to an air stripper which removes most of the surface water from the filament to a level < 2% water on weight of the dry filament. The monofilament is then forwarded to the first stage draw rolls which are heated to [15] °C and running at [16] mpm.

The filament is then forwarded in three passes through a radiant heater of about 127 cm length at a mean temperature of about [17] °C. Three-controlled-speed change of direction rolls are employed to advance the monofilament through the heater and to control the amount of draw in each pass. The roll speed before pass 1 is [18] mpm, before pass 2 is [19] mpm, before pass 3 is [20] mpm, and after pass 3 is [21] mpm. The monofilament is then forwarded to second-stage draw rolls running at about [22] mpm, let down rolls at about [23] mpm and to a wind-up package. The tension at wind-up is about [24] grams and is adjusted to give good package formation.

The products of this process are obround cross-section monofilaments with 24-hour conditioned properties as shown in Table 4, and dipped cord (prepared by the methods described in Examples 8, 9 and 10) and in-rubber properties as shown in Table 5.

TABLE 3

Examples 1-7

| | | 1 | 2 | 3 | 4 | 5 | 6 | 7 |
|---|---|---|---|---|---|---|---|---|
| | Example No. | | | | | | | |
| | dtex* | 4385 | 5728 | 6873 | 4090 | 4873 | 6902 | 8791 |
| [1] | (Denier)* | (3951) | (5160) | (6192) | (3685) | (4390) | (6218) | (7920) |
| [2] | WTR | 3.0 | 3.9 | 4.4 | 3.8 | 4.8 | 3.1 | 3.9 |
| [3] | Kgs/hr. | 17.6 | 18.9 | 19.2 | 16.1 | 19.2 | 19.2 | 34.1 |
| [4] | Capillary mm | 9.65 | 11.2 | 12.7 | 11.2 | 12.7 | 9.65 | 14.4 |
| | x mm | 2.79 | 2.44 | 2.44 | 2.44 | 2.24 | 2.79 | 3.18 |
| [5] | Air Gap, cm | 64.8 | 64.8 | 64.8 | 64.8 | 64.8 | 64.8 | 71.8 |
| | Quench Water | | | | | | | |
| [6] | Temp, °C | 22 | 22 | 22 | 22 | 22 | 22 | 22 |
| [7] | Length, cm | 441 | 390 | 304 | 353 | 321 | 353 | 441 |
| [8] | Puller Roll, mpm | 119.4 | 99.3 | 85.0 | 119.4 | 119.4 | 85.0 | 117.7 |
| [9] | Pretension Rolls, mpm | 120.3 | 99.8 | 85.6 | 120.3 | 120.3 | 85.6 | 117.8 |
| [10] | Feed Roll, mpm | 122.7 | 102.1 | 87.4 | 122.7 | 122.7 | 87.4 | 120.0 |
| [11] | Water Added gm/min | 38 | 38 | 38 | 38 | 38 | 38 | 38 |
| [12] | Steamer Leng., cm | 36 | 36 | 36 | 36 | 36 | 36 | 49 |
| | Steam | | | | | | | |
| [13] | Press, K Pa (psig) | 965 | 1000 | 1000 | 1000 | 1000 | 1000 | 1000 |
| | | (140) | (145) | (145) | (145) | (145) | (145) | (145) |
| [14] | Temp, °C | 175 | 180 | 180 | 180 | 180 | 180 | 180 |
| | First Draw Rolls | | | | | | | |
| [15] | Temp, °C | 155 | 155 | 155 | 155 | 155 | 155 | 146 |
| [16] | Mpm | 454 | 378 | 323 | 454 | 454 | 323 | 454 |
| | Radiant Heater | | | | | | | |
| [17] | Temp, °C | 870 | 870 | 870 | 870 | 870 | 870 | 870 |
| [18] | Mpm before Pass 1 | 471 | 392 | 335 | 471 | 471 | 335 | 471 |
| [19] | Mpm " Pass 2 | 542 | 451 | 386 | 542 | 542 | 386 | 542 |
| [20] | Mpm " Pass 3 | 621 | 517 | 442 | 621 | 621 | 442 | 621 |
| [21] | Mpm after Pass 3 | 675 | 562 | 481 | 675 | 675 | 481 | 675 |
| [22] | 2nd Stg Rolls mpm | 688 | 572 | 490 | 688 | 688 | 490 | 688 |
| [23] | Letdown Rolls mpm | 673 | 560 | 479 | 673 | 673 | 479 | 673 |
| [24] | Wind-up Ten. gms | 750 | 800 | 850 | 750 | 750 | 800 | 850 |

* Conditioned for 24 hours after spinning

## TABLE 4

### Monofilament Properties After 24 Hours of Conditioning After Spinning

| Example No. | 1 | 2 | 3 | 4 | 5 | 6 | 7 |
|---|---|---|---|---|---|---|---|
| dtex | 4385 | 5728 | 6873 | 4090 | 4873 | 6902 | 8791 |
| (Denier) | (3951) | (5160) | (6192) | (3685) | (4390) | (6218) | (7920) |
| Str. Ten, dN/tex (gpd) | 8.2 | 8.1 | 8.0 | 8.1 | 8.1 | 8.0 | 7.6 |
| | (9.3) | (9.2) | (9.1) | (9.2) | (9.2) | (9.1) | (8.6) |
| Eb, % | 18.1 | 18.7 | 19.1 | 18.5 | 17.7 | 19.1 | 17.9 |
| Mod, dN/tex (gpd) | 46 | 45 | 45 | 46 | 46 | 44 | 45 |
| | (52) | (51) | (51) | (52) | (52) | (50) | (51) |
| Knot Ten, dN/tex (gpd) | 5.6 | 5.3 | 4.8 | 5.2 | 4.8 | 5.3 | 4.8 |
| | (6.4) | (6.0) | (5.5) | (5.9) | (5.4) | (6.0) | (5.4) |
| Width, mm | 1.15 | 1.45 | 1.69 | 1.28 | 1.48 | 1.43 | 1.82 |
| Thickness, mm | 0.38 | 0.38 | 0.38 | 0.33 | 0.31 | 0.46 | 0.46 |
| Toughness*, dN-cm/tex-cm | .65 | .64 | .72 | .65 | .66 | .69 | .63 |
| (g-cm/denier-cm) | (.74) | (.73) | (.82) | (.74) | (.75) | (.78) | (.71) |

*fully conditionned

EP 0 374 356 B1

## TABLE 5

### Fully Conditioned Dipped Cord and In-Rubber Properties

| Example No. | 1 | 2 | 3 | 4 | 5 | 6 | 7 |
|---|---|---|---|---|---|---|---|
| (Denier) (Fully Cond.) | (4090) | (5370) | (6310) | (3740) | (4540) | (6350) | (7960) |
| dtex | 4540 | 5960 | 7004 | 4154 | 5040 | 7048 | 8836 |
| Break Strength (N (kg)) | 353(36) | 431(44) | 519(53) | 323(33) | 382(39) | 510(52) | 647(66) |
| (Hot) 120°C 2-ply Adh N/cm (Kg/cm) | 78 (8) | 98 (10) | 69 (7) | 88 (9) | 98 (10) | 59 (6) | 69 (7) |
| Flex Fatigue Retained Str. % | 74 | 83 | 93 | 84 | 98 | 89 | - |
| Shrinkage, % | 4.2 | 4.2 | 4.3 | 4.8 | 4.7 | 3.7 | 3.9 |
| Dip Pick-up, % | 4.2 | 4.6 | 5.1 | 4.8 | 6.0 | 3.4 | 4.1 |

EP 0 374 356 B1

### Tire Building

In Examples 8 and 9, the control and example radial tires were assembled in two stages on a radial tire manufacturing machine made by NRM, Inc., Model RF 1216. The assembled tires were molded and cured in a Bag-O-Matic curing press manufactured by Akron Standard Co. The control and example bias-ply tires were made on the same equipment using the appropriate tire mold.

The D-417B dip bath used for the Control polyester tire cords was composed of: water (83.7 parts by weight); Gum Tragacanth, 2% solution (2.0 parts by weight); N.E.R.-010A Epoxy resin (1.4 parts by weight); and LVBI Isocyanate slurry, 25% dispersion (12.9 parts by weight).

D-5A is a resorcinol-formaldehyde latex-based adhesive and is applied on top of isocyanate-based subcoat adhesive to promote adhesion of cord to rubber when preparing polyester tire cords. When preparing nylon tire cords, D-5A is used without the isocyanate subcoat.

### Bias Light Truck Control Tire

Bias light truck tires were simulated by overconstructing (4-ply carcass) tires in a bias passenger tire mold (7.75-14). These 7.75-14 (load range D) tires were prepared using 1400 dtex (1260 denier) nylon tire yarn containing 210 filaments (T-728; Du Pont Co.). The cord was prepared using 394, turns/m (10 turns per inch) singles twist and 394 turns/m (10 turns per inch) ply twist. The greige cord was adhesive treated using RFL topcoat, dried in an oven at 135°C (275°F) /83 sec/1% and cured at 215°C (420°F)/48 sec/12% and 210°C (410°F)/77 sec/-2%, respectively. The number of cords in the carcass plies of the tires were adjusted to provide a carcass strength of about 2010 N/cm (1150 lbs/in) per ply (Tables 6, 7, and 8). The carcass rubber stock was a 0.381 mm (15 mil) skim and made up of natural rubber and SBR (styrene-butadiene rubber) in the ratio of 80:20. Carcass fabric was cut at a bias angle of 31° (measured from a line perpendicular to the cords in the fabric). The tread/sidewall was extruded in a single piece from a 25:75 natural rubber:SBR stock. The innerliner consisted of 1.27 mm (50 mil) thick sheet made up of chlorobutyl and natural rubber in the ratio of 70:30. The tires were built from those components along with a pair of appropriate beads and chafer fabric using the NRM machine. The tires were cured using a Firestone 7.75-14 Deluxe champion mold with cure cycle "C" (temperature - 146°C (295°F), pressure -1900 KPa (275 psi), time - 51 minutes) in the Bag-O-Matic press. Immediately after curing, the tires were post cure inflated for 32 minutes at 345 KPa (50 psi).

### Examples 8 and 9 - Bias Light Truck Tires

7.75-14 simulated bias light truck tires, Examples 8 and 9, were made in the same manner as the Bias Control except that the reinforcement cord for the carcass plies were the poly(hexamethylene adipamide) monofilaments of Examples 2 and 6, respectively, instead of the nylon multifilament cord. The monofilament did not require any twisting or plying to be converted to greige cord. The monofilament was adhesive treated using a RFL (resorcinol-formaldehyde-latex) topcoat (no subcoat needed) and cured in the oven at 215°C (420°F)/60 seconds exposure/1.5% applied stretch. The number of cords in the carcass plies of the tires were adjusted to provide about 2030 N/cm (1160 lbs/in) per ply carcass strength, about the same strength as Control. Bias light truck tires were built from four plies of the nylon monofilament reinforced carcass fabrics in the same manner, and with the same other components and rubber stocks and design used for the Bias Control. (Table 6).

Table 6 shows the tire design data for Examples 8 and 9, and the Bias Control. Table 7 represents the tire performance results for DOT 119 step load endurance test. Even with substantially less fiber, the Example 8 tire showed distinct advantages in tire durability. The example 8 tire exhibited significantly lower heat generation as evidenced by contained air temperatures. Also Example 8 tire unexpectedly exhibited lower growth, lower rolling resistance and higher cornering coefficient than the bias control.

The Example 9 tire shows the same kind of advantages in a tire made with another monofilament of the invention with the tire having a higher rivet area.

The ends of all four plies of the monofilament fabrics were turned up together over the bead with surprising ease for fabrics made with 5960 and 7050 dtex (5370 and 6350 denier) monofilaments (Examples 2 and 6, respectively).

Measurement of fabric bending stiffness showed the monofilament fabrics made using monofilaments of Examples 2 and 3, 5960 and 7000 dtex (5370 and 6310 denier), respectively, to actually be less stiff than a multifilament polyester fabric of equal strength (Table 8).

EP 0 374 356 B1

## Table 6
### TIRE CONSTRUCTION DETAILS
### OVERBUILT 7.75-14 (LOAD RANGE D)

|  | Bias Control | Example 8 | Example 9 |
|---|---|---|---|
| Reinforcement fiber | Nylon multifilament | Nylon Monofilament (Ex. 2) | Nylon Monofilament (Ex. 6) |
| Cord Construction | 1400/1/2 (1260/1/2) | 5960 dtex (5370d) | 7050 dtex (6350d) |
| No. Plies | 4 | 4 | 3.9 (4) |
| Ends per cm (Epi) | 9.8 (25) | 4.7 (12) | 10 |
| Carcass Strength, N/cm (lbs/in) | 8055 (4600) | 8160 (4660) | 8125 (4640) |
| Rivet Area, % | 35 | 31 | 43 |
| Cord Gauge, mm (inches) | .66 (.026) | .38 x 1.5 (.015x .059) | .47x 1.4 (.0185x.057) |
| Cutting Angle | 31° | 31° | 31° |
| Ply width - # 1, cm (in) | 72.1 (28-3/8) | 72.1 (28-3/8) | 72.1 (28-3/8) |
| Ply width - # 2, cm (in) | 74.6 (29-3/8) | 74.6 (29-3/8) | 74.6 (29-3/8) |
| Ply width - # 3, cm (in) | 78.7 (31) | 78.7 (31) | 78.7 (31) |
| Ply width - # 4, cm (in) | 69.2 (27-1/4) | 69.2 (27-1/4) | 69.2 (27-1/4) |
| Drum Set, in | 52.1 (20-1/2) | 52.1 (20-1/2) | 52.1 (20-1/2) |
| Turn up Design | 4 up | 4 up | 4 up |
| Cure | "C" | "C" | "C" |
| Post Inflation | 32 min 345 kPa (50 psi) | 32 min 345 kPa (50 psi) | 32 min 345 kPa (50 psi) |

## TABLE 7
### Tire Test Results Including Performance in
### DOT 119 Step Load Endurance Tests Plus Extension

|  | Bias Control | Tire<br>Example 8 | Tire<br>Example 9 |
|---|---|---|---|
| Carcass fiber | 1400 (1260)/1/2 Nylon | 5960 dtex (5370d) Polyamide | 7050 dtex (6350d) Polyamide |
| Cord | Multifilament | Monofilament (Ex. 2) | Monofilament (Ex. 6) |
| Gauge, mm (in) | .66 (0.026) | .38 x 1.5 (0.015 x 0.059) | .47 x 1.4 (.0185 x .057) |
| Ends per cm (epi) | 9.8 (25) | 4.7 (12) | 3.9 (10) |
| Carcass strength,<br>N/cm (lbs/in) | 8055 (4600) | 8160 (4660) | 8125 (4640) |
| Rivet area, % | 35 | 31 | 43 |
| Step load at failure | 140% | 150% | 150% |
| Total km (miles) to failure | 7790 (4840) | 9060 (5630) | 8770 (5450) |
| Contained air temp at<br>120% load | 103°C (218°F) | 98.3°C (209°F) | 98.9°C (210°F) |
| Growth, % | 3.5 | 2.5 | 2.8 |
| Rolling resistance, N (lbs.) | 70.7 (15.9) | 66.3 (14.9) | 66.3 (14.9) |
| Cornering Coeff<br>N/degree (lb/degree) | .67 (.15) | .76 (.17) | .76 (.17) |

EP 0 374 356 B1

Radial Control Tire

Radial passenger tires were built utilizing one ply of polyester fabric for carcass reinforcement, two plies of

## TABLE 8

### Stiffness of Rubberized Tire Cord
### Fabrics*

| | Monofilament Example 2 | Multifilament Nylon | Monofilament Example 3 | Multifilament Polyester |
|---|---|---|---|---|
| Construction | 5960 dtex (5370 den.) | 1400 (1260) 1/2 | 7000 dtex (6310 Denier) | 1100 (1000) 1/3 |
| Cord Gauge, in | .015 x .059 | .026 | .015 x .067 | .026 |
| Ends per cm (Epi) | 4.3 (11) | 9.8 (25) | 3.9 (10) | 9.8 (25) |
| Carcass str N/cm (lbs/in) | 2032 (1160) | 2015 (1150) | 2032 (1160) | 1927 (1100) |
| Rivet area, % | 35 | 35 | 33 | 35 |
| Fabric bending stiffness, cm².N/cm (in.²-lbs/in.) | 1 (.088) | .814 (.072) | 1.12 (.099) | 2.26 (.200) |

* .038 cm (.015) in layer of rubber on each side of fabric, cured 20 minutes at 160°C, 1340 kPa (195 psi)

2.5x10.2x0.3 cm (1x4 x .25) steel cord for belts, and one ply of nylon fabric for a cap ply. The yarn utilized for the carcass cord was conventional 1110 dtex (1,000 denier), 192 filament T-900 tire yarn from Hoechst-Celanese Co. This yarn was twisted into a 1110/1/2 (1,000/1/2) cord construction with 433 turns per m (11 turns per inch) twist imparted in both plying and cabling steps. This cord was then hot stretched in a two oven process using a conventional 2-step polyester adhesive dip. Specific conditions employed were 243/215°C (470/420°F), 50/80 seconds exposure time, 3/0% applied stretch, D417B/D-5A adhesive. The carcass fabric was then formed from a single end of cord using a drum winding process. Two plies of 20 mil skim rubber (80% natural rubber/20% styrene butadiene rubber) were used in preparing the carcass fabric. Belt plies and cap plies were formed from steel cord and 930/1/2 (840/1/2) nylon cord respectively, using similar drum winding processes. P155/80R13 tires were then built from this fabric using the NRM Corp. tire building equipment. Other components used in constructing the tire were tread and sidewall sections extruded from styrene-butadiene/natural rubber blends, a 1.27 mm (50 mil) thick sheet of chlorobutyl/natural rubber innerliner, a 0.51 mm (20 mil) cushion of the same rubber stock employed in the carcass inserted between the innerliner and carcass, and a pair of rubber wrapped 4-wire/4-turn beads. The ends of the carcass ply were turned up over the tire beads, with the end of the ply extending about 5.1 cm (2 inches) above the bead. The green tire was cured at about 146°C (295°C) in the Bag-O-Matic tire curing press using a commercial P155/80R13 tire mold. Additional details of tire construction and radial tire test results are given in Table 9.

Example 10 Tire

P155/80R13 radial passenger tires were built using a construction identical to the Radial Control except that one ply of the 5040 dtex (4540 denier) poly(hexamethylene adipamide) monofilament of Example 5 (obround cross-section with a width-to-thickness ratio of 4.8, a break strength of 380 N (85 lbs) and a relative viscosity of 70) was used for carcass reinforcement. Process conditions used to dip-stretch the monofil cord were 215°C (420° F)/60 seconds exposure/1.5% applied stretch. A single step adhesive (20%D-5A) was all that was required for the monofil. The number of ends of monofil in the fabric was adjusted to provide the same carcass strength as in the polyester Radial Control fabric.

Tire testing was conducted on two tires per item and the average results are compared in Table 9. The Example 10 monofilament tires clearly exhibited superior durability in bead area endurance (BAE) testing on the indoor test wheel. The monofilament tires were slightly cooler running as evidenced by contained air temperatures (CAT) monitored by a thermocouple during BAE testing. The bending stiffness of the monofilament fabric made from Example 5 and used to construct the tire carcass was significantly lower than equal carcass strength fabric made from multifilament 1100/1/2 (1000/1/2) polyester cord that had only 1/2 the total denier of the 5040 dtex (4540 denier) monofilament (Table 10).

### Table 9
### TIRE CONSTRUCTION - I - PLY CARCASS
### (P155/80R13)

| | Radial Control Tires<br>Polyester<br>Multifilament | Example 10 Tire<br>Polyamide<br>Monofilament (Ex. 5) |
|---|---|---|
| **Carcass** | | |
| Construction | 1110/1/2 (1000/1/2) | 4940 dtex (4450d)* |
| No. Plies | 1 | 1 |
| Cord Gauge, mm (Inches) | 0.53 (.021) | 0.30 x 1.5 (.012x.058) |
| Ends per cm (Epi) | 9.8 (25) | 3.5 (9) |
| Rivet Area, % | 47 | 47 |
| Cord Strength, N (lbs) | 130 (30) | 380 (85) |
| Carcass Strength, N/cm (lbs/in) | 1310 (750) | 1340 (765) |
| Plys width, cm (in) | 46 (18 1/8) | 46 (18 1/8) |
| Drum Set, cm (in) | 29 (11-3/8) | 29 (11-3/8) |
| | | |
| **Belt** | 2.5 x 10.2 x 0.63 cm (1x4x0.25) wire | 2.5 x 10.2 x 0.63 cm (1x4x0.25 wire) |
| Ends per cm (epi) | 9.8 (25) | 9.8 (25) |
| cutting angle | 68° | 68° |
| width cm (inch) | 11.75 (4 5/8") | 11.75 (4 5/8") |
| | | |
| **Cap Ply** | 930/1/2 (840/1/2 nylon) | 930/1/2 (840/1/2 nylon) |
| Ends per cm (epi) | 9.4 (24) | 9.4 (24) |
| cutting angle | 0° | 0° |
| width cm (inch) | 13.1 (5 1/8") | 13.1 (5 1/8") |
| | | |
| **Treatment** | | |
| Cure | "C" | "C" |
| Post Inflation | None | None |
| | | |
| **Tire Performance** | | |
| Rolling resistance, N (lbs) | 36 (8.1) | 34 (7.7) |
| Comering coefficient N/deg. (lb/deg.) | 0.76 (.17) | 0.71 (.16) |
| Bead area endurance test | | |
| -CAT @ 150% load, °C (°F) | 73 (164) | 73 (163) |
| -load at failure, % | 210 | 210 |
| -Km (miles) at failure | 3025 (1880) | 4360 (2710) |

*Fully Conditioned

TABLE 10

Stiffness of Rubberized Tire Cord Fabrics*

| | Example 5 | Multifilament Nylon | Multifilament Polyester |
|---|---|---|---|
| Construction | 5040 dtex (4540d)** | 932 (840)/1/2 | 1110 (1000)/1/2 |
| Cord gauge, mm (inches) | 0.3 x 1.5 (.012x.058) | .021 | .021 |
| Ends per cm (Epi) | 3.5 (9) | 0.53 (25) | 0.53 (25) |
| Carcass str, N/cm (lbs/in) | 1340 (765) | 1440 (825) | 1310 (750) |
| Rivet area, % | 47 | 47 | 47 |
| Fabric bending stiffness, cm².N/cm (in².lbs/in) | 0.6 (.053) | 0.45 (.040) | 1.311 (.116) |

* 0.5 mm (.020 in) layer of rubber on each side of fabric, uncured
** Fully Conditioned

**Claims**

1. A monofilament of oriented thermoplastic polymer having an oblong cross-section defining a width-to-thickness ratio (WTR) for said monofilament of greater than 2.0, said monofilament having a linear density of greater than 1111 dtex (1000 den), a tenacity of greater than 6.6 dN/tex (7.5 g/d) and a modulus greater than 40 dN/tex (45 g/d), characterized by

a width in mm of greater than $1.22/(density)^{1/2}$ which is greater than 1.15 mm for polyamide and greater than 1.03 for polyester and

the relationship between linear density and width-to-thickness ratio (WTR) being defined by the equation:

$$linear\ density = \left[\frac{217 \times WTR\,(1.225)^{\,n}}{(tenacity) \times \sqrt{WTR - .215}}\right]^{2} \times \frac{FSR}{density}$$

wherein tenacity is expressed in dN/tex, n = -1, 0, 1, 2, 3, 4, FSR (Fabric Strength Ratio) = .95 - 1.25 and density is expressed in g/ml

with the exception of

a monofilament consisting of polyamides comprising at least 90% of at least one of poly-($\varepsilon$-caproamide) or poly(hexamethylene adipamide) and having a surface layer at least 3 and less than 15 microns thick, said layer having an orientation lower than that of the core and a parallel refractive index for the polymer in said surface layer of less than 1.57, and a modification ratio greater than 4.0, the modification ratio being the ratio of the diameter of the smallest circumscribing circle to the diameter of the largest inscribing circle determined by the monofilament cross-sectional surface and

a monofilament consisting of poly(ethylene terephthalate) and having a modification ratio greater than 4.0.

2. The monofilament of claim 1 wherein said thermoplastic polymer is selected from the class consisting of polyamide homopolymers and copolymers and polyester homopolymers and copolymers.

3. The monofilament of claim 1 wherein said thermoplastic polymer is selected from the class consisting of polyamides comprising at least 90% of at least one of poly ($\varepsilon$-caproamide) or poly(hexamethylene adipamide).

4. The monofilament of claim 1 wherein said thermoplastic polymer is poly(hexamethylene adipamide).

5. The monofilament of claim 1 wherein said thermoplastic polymer is poly(ethylene terephthalate).

6. The monofilament of claim 3 wherein said monofilament has a tenacity of above 7.1 dN/tex (8.0 g/d) and a modulus of greater than 44 dN/tex (50 g/d).

7. The monofilament of claim 3 wherein said monofilament has a surface layer at least 3 and less than 15 microns thick, said layer having an orientation lower than the core and a parallel refractive index for the polymer in said surface layer of less than 1.57.

8. The monofilament of claim 3 wherein said polyamide has a relative viscosity of greater than 50.

9. The monofilament of claim 3 wherein said monofilament has a toughness of greater than 0.62 dN-cm/tex-cm (0.7 g-cm/denier-cm).

10. The monofilament of claim 3 having a knot strength of greater than 4.4 dN/tex (5.0 g/d).

11. The monofilament of claim 1 wherein said cross-section of said monofilament is obround.

12. The monofilament of claim 1 wherein said linear density is greater than 2222 dtex (2000 den).

13. The monofilament of claim 1 wherein said width-to-thickness ratio is less than 20.

14. The monofilament of claim 1 wherein said FSR (Fabric Strength Ratio) = 1.00-1.20.

15. A rubberized fabric comprising a rubber matrix containing monofilaments of claim 1 as reinforcement.

16. The rubberized fabric of claim 15 wherein said monofilaments are free of twist and are arranged in said fabric in a parallel and evenly spaced-apart relationship.

17. A monofilament according to any one of claims 1 to 16 characterized by a shrinkage of less than 6% and by the surface of said monofilament having an adhesive coating of from 0.5 to 6.0 percent by weight based on the weight of the monofilament.

18. The monofilament of claim 17 wherein said shrinkage is less than 4.5%.

19. A tire comprising at least one pair of bead portions and at least one carcass ply wrapped around said bead portions wherein each carcass ply comprises a rubberized fabric containing monofilaments as set forth in any one of claims 1-14.

20. The tire of claim 19 wherein said monofilaments are free of twist and are arranged in said fabric in a parallel and evenly spaced-apart relationship.

**Patentansprüche**

1. Monofilament aus einem orientierten thermoplastischen Polymer, das einen länglichen Querschnitt mit einem Breite-Dicke-verhältnis (WTR) bei dem Monofilament von mehr als 2,0 aufweist, wobei das Monofilament eine lineare Dichte von mehr als 1111 dtex (1000 den), eine Festigkeit von mehr als 6,6 dN/tex (7,5 g/d) und einen Modul von mehr als 40 dN/tex (45 g/d) aufweist,
gekennzeichnet durch
eine Breite in mm von mehr als $1,22/(Dichte)^{1/2}$, die größer ist als 1,15 mm bei Polyamid und größer als 1,03 bei Polyester, und
dadurch, daß die Beziehung zwischen linearer Dichte und Breite-Dicke-Verhältnis (WTR) definiert ist durch die Gleichung:

$$Lineare\ Dichte = \left[ \frac{217 \times WTR\ (1,225)^{n}}{(Festigkeit) \times \sqrt{WTR - 0,215}} \right]^{2} \times \frac{FSR}{Dichte}$$

worin die Festigkeit ausgedrückt ist in dN/tex, n = -1, 0, 1, 2, 3, 4, FSR (Gewebefestigkeitsverhältnis) = 0,95 - 1,25 und die Dichte ausgedrückt ist in g/ml,
mit Ausnahme von
einem Monofilament, bestehend aus Polyamiden, umfassend mindestens 90 % von mindestens einem von einem Poly(ε-caproamid) oder von einem Poly(hexamethylenadipamid), das eine Oberflächenschicht von mindestens 3 und weniger als 15 Mikrometer Dicke aufweist, wobei die Schicht eine kleinere Orientierung als der Kern sowie einen Parallelbrechungsindex für das Polymer in der Oberflächenschicht von weniger als 1,57 und ein Modifikationsverhältnis von mehr als 4,0 besitzt, wobei das Modifikationsverhältnis das Verhältnis des Durchmessers des kleinsten umschreibenden Kreises zu dem Durchmesser des größten einschreibenden Kreises ist, bestimmt durch die Querschnittsfläche des Monofilaments, und
einem Monofilament, das aus Poly(ethylenterephthalat) besteht und ein Modifikationsverhältnis von mehr als 4,0 besitzt.

2. Monofilament nach Anspruch 1, worin das thermoplastische Polymer ausgewählt ist aus der Gruppe bestehend aus Homopolymeren und Copolymeren von Polyamid und aus Homopolymeren und Copolymeren von Polyester.

3. Monofilament nach Anspruch 1, worin das thermoplastische Polymer ausgewählt ist aus der Gruppe bestehend aus Polyamiden, umfassend mindestens 90 % von mindestens einem von einem Poly(ε-Caproamid) oder von einem Poly(hexamethylenadipamid).

4. Monofilament nach Anspruch 1, worin das thermoplastische Polymer Poly(hexamethylenadipamid) ist.

5. Monofilament nach Anspruch 1, worin das thermoplastische Polymer Poly(ethylenterephthalat) ist.

6. Monofilament nach Anspruch 3, worin das Monofilament eine Festigkeit von mehr als 7,1 dN/tex (8,0 g/d) und einen Modul von mehr als 44 dN/tex (50 g/d) besitzt.

7. Monofilament nach Anspruch 3, worin das Monofilament eine Oberflächenschicht von mindestens 3 und weniger als 15 Mikrometer Dicke aufweist, wobei die Schicht eine kleinere Orientierung als der Kern sowie einen Parallelbrechungsindex für das Polymer in der Oberflächenschicht von weniger als 1,57 besitzt.

8. Monofilament nach Anspruch 3, worin das Polyamid eine relative viskosität von mehr als 50 aufweist.

9. Monofilament nach Anspruch 3, worin das Monofilament eine Zähigkeit von mehr als 0,62 dN-cm/tex-cm (0,7 g-cm/Denier-cm) besitzt.

10. Monofilament nach Anspruch 3, das eine Knotenfestigkeit von mehr als 4,4 dN/tex (5,0 g/d) aufweist.

11. Monofilament nach Anspruch 1, worin der Querschnitt des Monofilaments rundlich ist.

12. Monofilament nach Anspruch 1, worin die lineare Dichte mehr als 2222 dtex (2000 den) beträgt.

13. Monofilament nach Anspruch 1, worin das Breite-Dicke-Verhältnis weniger als 20 beträgt.

14. Monofilament nach Anspruch 1, worin das FSR (Gewebefestigkeitsverhältnis) 1,00 - 1,20 beträgt.

15. Gummiertes Gewebe, umfassend ein Gummisubstrat, enthaltend Monofilamente nach Anspruch 1 als Verstärkung.

16. Gummiertes Gewebe nach Anspruch 15, worin die Monofilamente drehungsfrei sind und in dem Gewebe parallel und gleichmäßig voneinander beabstandet angeordnet sind.

17. Monofilament nach einem beliebigen der Ansprüche 1 bis 16, gekennzeichnet durch eine Schrumpfung von weniger als 6 % und dadurch, daß die Oberfläche der Monofilamente eine Klebstoffschicht von 0,5 bis 6,0 Gew.-% aufweist, beruhend auf dem Gewicht des Monofilaments.

18. Monofilament nach Anspruch 17, worin die Schrumpfung weniger als 4,5 % beträgt.

19. Reifen, umfassend mindestens ein Paar Wulstabschnitte und mindestens eine die Wulstabschnitte umhüllende Karkassenlage, worin jede Karkassenlage ein gummiertes Gewebe mit Monofilamenten darin umfaßt, wie in einem beliebigen der Ansprüche 1 - 14 erläutert.

20. Reifen nach Anspruch 19, worin die Monofilamente drehungsfrei sind und in dem Gewebe parallel und gleichmäßig voneinander beabstandet angeordnet sind.

**Revendications**

1. Un monofilament de polymère thermoplastique orienté ayant une section transversale oblongue définissant un rapport de la largeur à l'épaisseur (RLE) supérieur à 2,0 pour ledit monofilament, ledit monofilament ayant une masse linéique supérieure à 1111 dtex, une ténacité supérieure à 6,6 dN/tex et un module supérieur à 40 dN/tex, caractérisé par
une largeur en mm supérieure à $1,22/(\text{densité})^{1/2}$ qui est supérieure à 1,15 mm pour du polyamide et supérieure à 1,03 pour du polyester, et la relation entre la masse linéique et le rapport de la largeur à l'épaisseur (RLE) étant définie par l'équation :

$$\text{masse linéique} = \left[ \frac{217 \times \text{RLE}\,(1,225)^{n}}{(\text{ténacité}) \times \sqrt{\text{RLE - 0,215}}} \right]^{2} \times \frac{\text{RRT}}{\text{densité}}$$

où la ténacité est exprimée en dN/tex, n = -1, 0, 1, 2, 3, 4, RRT (Rapport de Résistance du Tissu) = 0,95 à 1,25 et la densité est exprimée en $g/cm^3$, à l'exception
d'un monofilament constitué de polyamides comprenant au moins 90 % de poly ($\varepsilon$ - caproamide) et/ou de poly (hexaméthylène-adipamide) et ayant une couche superficielle d'au moins 3 et de moins de 15 micromètres d'épaisseur, ladite couche ayant une orientation plus faible que celle de l'âme et un indice de réfraction parallèle inférieur à 1,57 pour le polymère de ladite couche superficielle, et un rapport de modification supérieur à 4,0, le rapport de modification étant le rapport du diamètre du plus petit cercle circonscrit au diamètre au plus grand cercle inscrit déterminés par la surface de section transversale du monofilament, et
d'un monofilament constitué de polytéréphtalate d'éthylène et ayant un rapport de modification supérieur à 4,0.

2. Le monofilament de la revendication 1, dans lequel ledit polymère thermoplastique est choisi dans la classe formée par les polyamides homopolymères et copolymères et les polyesters homopolymères et copolymères.

3. Le monofilament de la revendication 1, dans lequel ledit polymère thermoplastique est choisi dans la classe formée par les polyamides comprenant au moins 90 % de poly($\varepsilon$-caproamide) et/ou de poly(hexaméthylène-adipamide).

**4.** Le monofilament de la revendication 1, dans lequel ledit polymère thermoplastique est du poly(hexaméthylène-adipamide).

**5.** Le monofilament de la revendication 1, dans lequel ledit polymère thermoplastique est du polytéréphtalate d'éthylène.

**6.** Le monofilament de la revendication 3, dans lequel ledit monofilament a une ténacité supérieure à 7,1 dN/tex et un module supérieur à 44 dN/tex.

**7.** Le monofilament de la revendication 3, dans lequel ledit monofilament comporte une couche superficielle d'au moins 3 et de moins de 15 micromètres d'épaisseur, ladite couche ayant une orientation plus faible que celle de l'âme et un indice de réfraction parallèle inférieur à 1,57 pour le polymère de ladite couche superficielle.

**8.** Le monofilament de la revendication 3, dans lequel ledit polyamide a une viscosité relative supérieure à 50.

**9.** Le monofilament de la revendication 3, dans lequel ledit monofilament a une ténacité supérieure à 0,62 dN-cm/tex-cm.

**10.** Le monofilament de la revendication 3, ayant une résistance de noeud supérieure à 4,4 dN/tex.

**11.** Le monofilament de la revendication 1, dans lequel ladite section transversale dudit monofilament est ronde-aplatie.

**12.** Le monofilament de la revendication 1, dans lequel ladite masse linéique est supérieure à 2222 dtex.

**13.** Le monofilament de la revendication 1, dans lequel ledit rapport de la largeur à l'épaisseur est inférieur à 20.

**14.** Le monofilament de la revendication 1, dans lequel ledit RRT (Rapport de Résistance du Tissu) = 1,00 à 1,20.

**15.** Un tissu caoutchouté comprenant une matrice de caoutchouc contenant des monofilaments de la revendication 1 comme renfort.

**16.** Le tissu caoutchouté de la revendication 15, dans lequel lesdits monofilaments sont exempts de torsion et sont disposés dans ledit tissu en une relation de parallélisme et d'écartement constant.

**17.** Un monofilament selon l'une quelconque des revendications 1 à 16, caractérisé par un retrait inférieur à 6 % et par le fait que la surface dudit monofilament comporte un revêtement adhésif à raison de 0,5 à 6,0 pour cent en poids par rapport au poids du monofilament.

**18.** Le monofilament de la revendication 17, dans lequel ledit retrait est inférieur à 4,5 %.

**19.** Un pneumatique comprenant au moins une paire de parties de talon et au moins une nappe de carcasse enroulée autour des parties de talon, dans lequel chaque nappe de carcasse comprend un tissu caoutchouté contenant des monofilaments tels que définis dans l'une quelconque des revendications 1 à 14.

**20.** Le pneumatique de la revendication 19, dans lequel lesdits monofilaments sont exempts de torsion et sont disposés dans ledit tissu en une relation de parallélisme et d'écartement constant.

Fig. 1a

Fig. 1b

Fig. 2

$W$ in mm = $1.22/\sqrt{density}$

Denier

Width-To-Thickness Ratio

EP 0 374 356 B1